Europäisches Patentamt

European Patent Office

Office européen des brevets

(11) Numéro de publication: **0 289 413**
A1

## DEMANDE DE BREVET EUROPEEN

(21) Numéro de dépôt: 88401005.9

(22) Date de dépôt: 25.04.88

(51) Int. Cl.⁴: **F 16 L 33/22**
F 16 L 5/00

(30) Priorité: 30.04.87 FR 8706156
07.04.88 FR 8804597

(43) Date de publication de la demande:
02.11.88 Bulletin 88/44

(84) Etats contractants désignés:
AT BE CH DE ES GB IT LI LU NL SE

(71) Demandeur: WESTAFLEX FRANCE
21, ru du Luxembourg
FR-59100 Roubaix (FR)

(72) Inventeur: Florian, Marc
97, avenue de Clichy
F-75017 Paris (FR)

(74) Mandataire: Coutel, Jean-Claude
Cabinet AYMARD & COUTEL 20, rue Vignon
F-75009 Paris (FR)

(54) Perfectionnements aux conduits et procédé de traitement de ces conduits.

(57) Le conduit, notamment souple pour le transfert d'air nécessaire à un moteur à combustion interne, porte localement un produit d'apport 3 adhérant fermement à la structure du conduit 2 et recouvrant une partie de celui-ci. Ce produit d'apport peut constituer une coiffe extrême de montage ferme et étanche sur une pièce de réception 1.

Fig. 1

## Description

### PERFECTIONNEMENTS AUX CONDUITS ET PROCEDE DE TRAITEMENT DE CES CONDUITS.

La présente invention est relative aux conduits, notamment présentant une certaine souplesse et utilisés pour le transfert d'air chaud ou froid, avec ou sans pression, dans des moteurs à combustion interne, par exemple à la sortie du filtre à air ou dans un circuit pneumatique de refroidissement de la batterie ou des circuits électroniques d'un véhicule automobile.

L'invention s'applique tout particulièrement, mais non exclusivement, aux conduits qui sont constitués soit par un tissage tubulaire, soit en déroulé d'aluminium, soit encore par un composite ondulé constitué par deux feuilles de papier goudronné entre lesquelles est disposée une feuille mince d'aluminium.

Actuellement, ces conduits donnent satisfaction quant à leur fonction de transport d'air, mais ils présentent un inconvénient important qui réside dans la difficulté de les raccorder à une pièce creuse de support. Ce raccordement est en effet effectué soit à l'aide d'un accessoire de serrage, du genre collier ou agrafe, soit à l'aide de colle. Au surplus, l'extrémité de montage de ces conduits n'est en général pas parfaite et il existe, suivant le cas, soit des barbes textiles, soit des parties métalliques agressives. Enfin, du fait que l'extrémité de ces conduits ne présente pas un fini de surface parfait, l'étanchéité ne peut être garantie qu'au prix d'un serrage important.

L'invention a pour but de remédier à ces inconvénients en fournissant un conduit qui puisse facilement être monté sur son support sans qu'il soit nécessaire d'avoir recours, au moment du montage, à un accessoire tel qu'un collier ou une agrafe, ou à un produit de collage.

A cet effet, le conduit selon l'invention est caractérisé par le fait qu'il porte localement un produit d'apport qui adhère fermement à la structure du conduit et qui recouvre une partie de celui-ci.

Au moment du montage, on dispose donc d'un conduit dont la partie de montage présente une surface ayant un fini parfait, ce qui favorise le montage et l'étanchéité.

En général, le produit d'apport est annulaire.

Suivant un mode de réalisation, le produit d'apport constitue une coiffe de section droite en U qui reçoit et chevauche l'extrémité du conduit et définit les surfaces périphériques intérieure et extérieure de l'extrémité du conduit. Avantageusement, cette coiffe présente à l'avant un chanfrein facilitant la venue en coopération du conduit avec la pièce qui le reçoit.

Le produit d'apport peut également définir une bague annulaire, intérieure ou extérieure, qui participe au montage et/ou à l'étanchéité.

Suivant une réalisation particulière, le produit d'apport présente un épaulement radial, intérieur ou extérieur, dirigé à l'opposé de ladite extrémité et destiné à coopérer avec un bourrelet ou analogue d'une pièce mâle ou femelle sur laquelle le conduit doit être monté.

Suivant une autre réalisation, le produit d'apport présente sur sa surface périphérique extérieure une gorge radiale de montage du conduit sur une paroi de support présentant une ouverture correspondante dont la partie marginale est destinée à coopérer avec la gorge.

Avec cet agencement, il suffit de faire pénétrer le conduit à travers l'ouverture pratiquée dans la paroi de support jusqu'à ce que la gorge vienne coopérer avec cette paroi, ce qui réalise d'une manière particulièrement simple le mon tage du conduit sur cette paroi.

Bien entendu, l'ouverture de la paroi présente des dimensions inférieures à celles de la gorge de manière que la partie marginale de l'ouverture pratiquée dans la paroi vienne se loger dans la gorge.

En général, la gorge est circulaire et l'ouverture de la paroi de support présente soit également une forme circulaire, soit des saillies radiales dirigées vers l'intérieur et destinées à être reçues dans la gorge.

Pour permettre la venue en coopération de la paroi avec la gorge, le produit d'apport est élastique pour pouvoir être comprimé radialement pour le passage de l'ouverture de la paroi et/ou cette paroi est déformable, au moins dans sa zone de coopération avec la gorge.

La paroi de support, en général, entoure le conduit sur 360° et, dans ce cas, l'ouverture qui y est pratiquée est un orifice, en général circulaire, mais il est également possible que la paroi de support n'entoure le conduit que partiellement, c'est-à-dire sur un angle inférieur à 360°, et, dans ce cas, son ouverture est pratiquée à partir de l'un de ses bords.

Avantageusement, le produit d'apport présente un chanfrein à au moins l'une de ses extrémités, ce chanfrein étant par exemple tronconique d'un demi-angle au sommet de 2° à 10°, notamment 5°, pour son introduction dans l'ouverture de la paroi de support.

Le produit d'apport présente de préférence une faible élasticité et une bonne stabilité dimensionnelle.

Il peut être constitué à base de polyuréthane, par exemple par la réaction d'un polyol avec un isocyanate, et notamment un bi-composant polyuréthane.

L'invention vise également un procédé pour traiter et réaliser le conduit fini ci-dessus, ce procédé consistant à appliquer localement sur le conduit un produit d'apport qui adhère fermement à la structure du conduit et recouvre une partie de celui-ci. Le produit d'apport peut être appliqué de toute manière appropriée, par exemple par simple moulage, par moulage par injection ou encore par pulvérisation.

On comprendra bien l'invention à la lecture du complément de description qui va suivre et en référence au dessin annexé dans lequel :

Fig. 1 est une coupe longitudinale éclatée de l'extrémité d'un conduit établi selon un mode de réalisation de l'invention et d'une pièce mâle de réception de celui-ci ;

Fig. 2 montre, en deux demi-coupes verticales, un moule pour l'application par simple moulage du produit d'apport sur l'extrémité du conduit, le procédé étant illustré dans deux phases ;

Fig. 3 montre, en coupe longitudinale, un moule pour l'application du produit d'apport par moulage par injection ;

Fig. 4 montre, en demi-coupe axiale, l'extrémié d'un conduit établi suivant un autre mode de réalisation ; et

Fig. 5 est une coupe axiale d'une extrémité d'un conduit selon un autre mode de réalisation de l'invention.

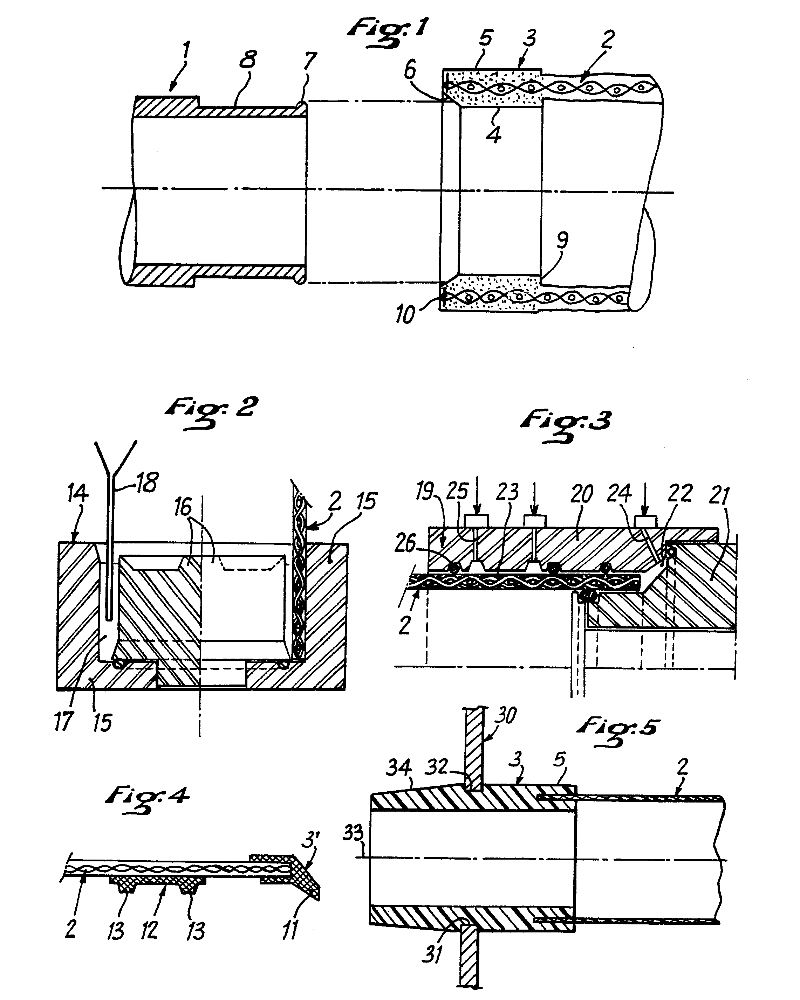

Sur la Fig. 1, on a représenté en 1 une pièce creuse, par exemple un embout mâle, destiné à recevoir un conduit 2. Ce conduit est par exemple constitué par un tissage tubulaire, un déroulé d'aluminium ou un composite ondulé constitué par deux feuilles de papier goudronné entre lesquelles est disposée une feuille mince d'aluminium.

Conformément à l'invention, on fait comporter au conduit 2 un produit d'apport 3 qui adhère fermement à la structure du conduit et qui recouvre une partie de celui-ci.

Dans le mode de réalisation de la Fig. 1, le produit d'apport 3 est annulaire et il est constitué par une coiffe de section droite en U qui vient recevoir et chevaucher l'extrémité du conduit pour définir les surfaces périphériques intérieure 4 et extérieure 5 du conduit. La coiffe 3 présente à l'avant un chanfrein 6 facilitant la venue en coopération du conduit 2 avec la pièce 1 qui présente à l'avant un bourrelet 7 dirigé radialement vers l'extérieur. Derrière le bourrelet 7, la pièce 1 présente une portée cylindrique 8 dont le diamètre est légèrement supérieur au diamètre de la surface périphérique intérieure 4 de la coiffe 3. La surface périphérique intérieure 4 se termine, à l'arrière, par un épaulement radial 9 destiné à coopérer avec le bord arrière du bourrelet 7, et la longueur de la coiffe 3 mesurée depuis sa face radiale avant 10 jusqu'à l'épaulement 9 est égale à la longueur axiale de la portée 8. Au montage, le bourrelet 7 pénètre à force dans la coiffe 3 et vient se loger derrière l'épaulement 9, le tube 2 étant ainsi monté fermement sur la pièce 1 avec une bonne étanchéité.

La coiffe 3 est légèrement élastique et elle présente une bonne stabilité dimensionnelle, ce qui permet, d'une part, un montage facile par déformation de la matière et, d'autre part, une bonne étanchéité du joint.

La coiffe 3 est de préférence à base de polyuréthane. Par exemple, elle est constituée par un bi-composant polyuréthane obtenu par la réaction d'un polyol avec un isocyanate.

La présence de la coiffe 3 donne au conduit 2 une bonne qualité de finition par suppression des éventuelles barbes textiles et des parties agressives, ainsi que de bonnes qualités dimensionnelles en raison du meilleur calibrage des diamètres, des longueurs, et un meilleur contact entre les pièces.

Bien entendu, la coiffe représentée sur la Fig. 3 n'est qu'illustrative ; on pourrait par exemple, à titre de variante, dans le cas où la pièce 1 est femelle, prévoir sur celle-ci un bourrelet 7 dirigé radialement vers l'intérieur, l'épaulement 9 de la coiffe 3 étant alors prévu à la périphérie extérieure.

Comme autre variante, on a représenté sur la Fig. 4 le produit d'apport qui est constitué en deux pièces séparées, à savoir une coiffe extrême 3' qui présente une lèvre 11 qui va en s'évasant à partir de l'extrémité du tube 2, et une bague 12 située à distance de la coiffe 3'. Dans l'exemple représenté, la bague 12 est située à l'extérieur du tube et elle présente deux bossages de montage 13. En variante, la bague 12 pourrait être prévue à l'intérieur du tube 2.

Le produit d'apport peut être appliqué sur le conduit 2 de toute manière appropriée, notamment par simple moulage, par moulage par injection ou encore par pulvérisation.

A titre d'exemple, on a représenté sur la Fig. 2 le procédé de moulage simple pour l'obtention de la coiffe 3 de la Fig. 1, et sur la Fig. 3 le procédé de moulage par injection pour l'obtention de la coiffe 3' et de la bague 12 de la Fig. 4.

Sur la Fig. 2, un moule 14 comporte une pièce extérieure 15 et une pièce intérieure 16 définissant une cavité annulaire de moulage 17 ouverte vers le haut. Comme montré sur la partie gauche de la Fig. 2, la cavité de moulage 17 est initialement partiellement remplie du produit de moulage (non représenté) à l'aide d'un verseur 18. La quantité de produit de moulage qui est introduite dans la cavité 17 correspond au volume de la matière constituant la coiffe 3. Ensuite, on plonge le tube 2 dans la cavité 17 jusqu'à une profondeur appropriée, après quoi on laisse réagir le produit de moulage jusqu'à ce qu'il se stabilise et adhère fermement à la structure du tube. Il suffit ensuite de démouler le tube pour obtenir le produit fini représenté à la Fig. 1.

Sur la Fig. 3, un moule 19 de moulage par injection comporte une pièce extérieure 20 et une pièce intérieure 21 d'axe horizontal, qui définissent deux cavités de moulage 22, 23 communiquant avec l'extérieur par des canaux d'injection 24,25. Des joints d'étanchéité 26 sont prévus aux extrémités de chaque cavité de moulage 22,23, ces cavités et ces joints définissant la forme de la coiffe 3' et de la bague 12. Le tube 2 est introduit axialement dans le moule, après quoi le produit de moulage est injecté dans les cavités de moulage 22,23 à travers les canaux 24,25. Quand le produit de moulage s'est stabilisé, le tube 2 est démoulé et présente l'aspect représenté sur la Fig. 4.

On a montré sur la Fig. 5 une variante de réalisation du produit d'apport 3 assujetti au conduit 2, pour son montage sur une paroi de support 30.

On pratique dans cette paroi une ouverture 31 et on fait comporter à la surface périphérique extérieure 5 du produit d'apport 3 une gorge 32 destinée à recevoir le bord ou partie marginale de l'ouverture 31. L'ouverture 31 présente des dimensions inférieures à celles de la gorge 32 pour que le bord de l'ouverture 31 puisse venir se loger dans cette gorge.

En général, la paroi 30 est perpendiculaire à l'axe 33 du produit d'apport 3 et, de façon correspondante, la gorge 32 est radiale.

En général également, la gorge 32 et l'ouverture 31 sont circulaires. En variante, l'ouverture 31 peut, de façon non représentée, présenter des saillies radiales espacées dirigées vers l'intérieur et destinées à venir se loger dans la gorge 32.

Pour permettre la pénétration du bord de l'ouverture 31 dans la gorge 32, le produit d'apport 3 est élastique pour pouvoir être comprimé radialement et/ou la paroi 30 est déformable, au moins dans sa zone marginale de coopération avec la gorge 32, de manière à permettre le passage de l'ouverture 31 sur la surface périphérique extérieure 5 du produit d'apport 3.

En général, la paroi 30 entoure le conduit sur 360° et son ouverture est alors un orifice, ou bien la paroi 30 entoure le conduit sur un angle inférieur à 360°, auquel cas l'ouverture 31 peut être pratiquée à partir d'un bord de la paroi.

Pour permettre l'engagement du produit d'apport 3 dans l'ouverture 31 de la paroi 30, le produit d'apport 3 présente, au moins à son extrémité d'entrée, un chanfrein 34, en général tronconique, dont l'angle au sommet peut être de 2° à 10°, notamment 5°.

Le produit d'apport 3, qu'il soit prévu à une extrémité ou dans une partie intermédiaire du conduit 2, peut être mis en place par le procédé décrit en référence à la Fig. 2.

Les dimensions de la gorge 32 sont établies selon les applications. Par exemple, elle peut avoir une profondeur de 0,2 à 3 mm, notamment de 0,5 mm à 1 mm, et une dimension axiale de l'ordre de 3 mm. En coupe axiale, la gorge 32 peut, comme représenté sur la Figure, présenter des flancs parallèles radiaux ou, en variante, des flancs inclinés formant deux chanfreins.

**Revendications**

1. Conduit, notamment souple pour le transfert d'air nécessaire à un moteur à combustion interne, caractérisé par le fait qu'il porte localement un produit d'apport (3,3',12) adhérant fermement à la structure du conduit (2) et recouvrant une partie de celui-ci.

2. Conduit selon la revendication 1, caractérisé par le fait que le produit d'apport est annulaire.

3. Conduit selon l'une des revendications 1 et 2, caractérisé par le fait que le produit d'apport constitue une coiffe (3,3') de section droite en U recevant et chevauchant l'extrémité du conduit (2) et définissant les surfaces périphériques intérieure (4) et extérieure (5) de l'extrémité du conduit (2).

4. Conduit selon la revendication 3, caractérisé par le fait que la coiffe présente à l'avant un chanfrein facilitant la venue en coopération du conduit avec une pièce (1) recevant celui-ci.

5. Conduit selon l'une des revendications 1 à 4, caractérisé par le fait que le produit d'apport définit une bague annulaire (12) intérieure ou extérieure.

6. Conduit selon l'une des revendications 1 à 5, caractérisé par le fait que le produit d'apport présente un épaulement radial (9), intérieur ou extérieur, dirigé à l'opposé de ladite extrémité et destiné à coopérer avec un bourrelet (7) ou analogue d'une pièce (1) mâle ou femelle sur laquelle le conduit (2) doit être monté.

7. Conduit selon l'une des revendications 1 à 6, caractérisé par le fait que le produit d'apport est faiblement élastique et présente une bonne stabilité dimensionnelle.

8. Conduit selon l'une des revendications 1 à 7, caractérisé par le fait que le produit d'apport est à base de polyuréthane et est constitué notamment par un bi-composant polyuréthane obtenu par la réaction d'un polyol avec un isocyanate.

9. Conduit selon l'une des revendications 1 à 8, caractérisé par le fait qu'il est constitué par un tissage tubulaire, un déroulé d'aluminium ou un composite ondulé constitué par deux feuilles de papier goudronné entre lesquelles est disposée une feuille mince d'aluminium.

10. Conduit selon l'une des revendications 1-5, 7-9, caractérisé par le fait que le produit d'apport (3) présente sur sa surface périphérique extérieure (5) une gorge (32), notamment radiale, pour le montage du conduit (2) sur une paroi de support (30) présentant une ouverture correspondante (31) dont la partie marginale est destinée à coopérer avec la gorge (32).

11. Conduit selon la revendication 10, caractérisé par le fait que l'ouverture (31) de la paroi (30) présente des dimensions inférieures à celles de la gorge (32).

12. Conduit selon l'une des revendications 10 et 11, caractérisé par le fait que la gorge (32) est circulaire.

13. Conduit selon l'une des revendications 10 à 12, caractérisé par le fait que l'ouverture (31) de la paroi de support (30) est circulaire.

14. Conduit selon l'une des revendications 10 à 13, caractérisé par le fait que l'ouverture (31) de la paroi de support (30) présente des saillies radiales dirigées vers l'intérieur et destinées à être reçues dans la gorge (32).

15. Conduit selon l'une des revendications 10 à 14 , caractérisé par le fait que le produit d'apport (3) est élastique pour pouvoir être comprimé radialement en vue du passage de l'ouverture (31) de la paroi de support (30) sur la surface périphérique extérieure (5) du produit d'apport (3).

16. Conduit selon l'une des revendications 10 à 15, caractérisé par le fait que la paroi de support (30) est déformable, au moins dans sa zone de coopération avec la gorge (32) du produit d'apport (3) en vue du passage de l'ouverture (31) de la paroi de support (30) sur la surface périphérique extérieure (5) du produit d'apport (3).

17. Conduit selon l'une des revendications 10 à 16, caractérisé par le fait que la paroi de support (30) entoure le conduit (2) sur 360° et son ouverture (31) est un orifice, en général circulaire.

18. Conduit selon l'une des revendications 10 à 17, caractérisé par le fait que la paroi de support (30) entoure le conduit (2) sur un angle inférieur à 360° et son ouverture (31) est pratiquée à partir de l'un de ses bords.

19. Conduit selon l'une des revendications 10 à 18, caractérisé par le fait que le produit d'apport (3) présente un chanfrein (34), au moins à une extrémité, par exemple un chanfrein tronconique d'un demi-angle au sommet de 2° à 10°, notamment 5°, pour son introduction dans l'ouverture (31) de la paroi de support (30).

20. Procédé pour traiter le conduit selon l'une des revendications 1 à 19, caractérisé par le fait qu'il consiste à appliquer localement sur le conduit (2) un produit d'apport qui adhère fermement à la structure du conduit et recouvre une partie de celui-ci.

21. Procédé selon la revendication 20, caractérisé par le fait que le produit d'apport est appliqué par moulage simple, par moulage par injection ou par pulvérisation.

22. Procédé selon l'une des revendications 20 et 21, caractérisé par le fait que le produit d'apport est appliqué sous la forme d'un mélange à base de polyuréthane, notamment d'un bi-composant polyuréthane obtenu par la réaction d'un polyol et d'un isocyanate.

0289413

Fig.1

Fig.2

Fig.3

Fig.4

Fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C-3 136 018 (RASMUSSEN) <br> * figures 1,6 * <br> --- | 1-4,6,7 ,20 | F 16 L 33/22 <br> F 16 L 5/00 |
| A | DE-B-1 295 930 (GLAENZER SPICER) <br> * figures 1,3 * <br> --- | 1,2 | |
| A | EP-A-0 219 418 (VALEO) <br> * abrégé; figure 2 * <br> --- | 1 | |
| A | GB-A-1 440 248 (H.L. NAIMER) <br> * figure 1 * <br> --- | 10-13, 17,19 | |
| A | US-A-3 653 692 (HENSON) <br> ----- | | |

DOMAINES TECHNIQUES RECHERCHES (Int. Cl.4)

F 16 L 33/00
F 16 L 5/00

Le présent rapport a été établi pour toutes les revendications

| Lieu de la recherche | Date d'achèvement de la recherche | Examinateur |
|---|---|---|
| BERLIN | 09-06-1988 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)